Europäisches Patentamt

European Patent Office

Office européen des brevets

(19)

(11) Veröffentlichungsnummer: **0 173 351**
A2

# (12) EUROPÄISCHE PATENTANMELDUNG

(21) Anmeldenummer: 85110988.4

(22) Anmeldetag: 30.08.85

(51) Int. Cl.⁴: **C 04 B 28/14**
//
(C04B28/14, 32:02, 40:00, 40:02)

(30) Priorität: 30.08.84 DE 3431953

(43) Veröffentlichungstag der Anmeldung: 05.03.86
Patentblatt 86/10

(84) Benannte Vertragsstaaten: **AT BE CH DE FR GB IT LI LU NL SE**

(71) Anmelder: **Bison-Werke Bähre & Greten GmbH & Co. KG, D-3257 Springe 1 (DE)**

(72) Erfinder: **Hübner, Jochen E., Wolfstalstrasse 5, D-3257 Springe 1 (DE)**

(74) Vertreter: **Säger, Manfred, Dipl.-Ing. et al, Patentanwälte Dipl.-Ing. Otto Flügel Dipl.-Ing. Manfred Säger Cosimastrasse 81, D-8000 München 81 (DE)**

(54) Verfahren zum Herstellen von Formteilen aus Gips, insbesondere Platten.

(57) Das Verfahren dient zum Herstellen von Formteilen aus Gips, insbesondere von Platten. Der Gips wird hierbei mit Wasser vermischt, geformt und unter Druckanwendung in die gewünschte Endform des Formteils gebracht. Die zumindest teilweise verunreinigten Gipsteilchen werden vor der Druckanwendung mit Bewehrungsmaterialien versehen.

EP 0 173 351 A2

ACTORUM AG

Dipl.-Ing. Otto Flügel, Dipl.-Ing. Manfred Säger, Patentanwälte, Cosimastr. 81, D-8 München 81

0173351

bison-werke
Bähre & Greten GmbH & Co. KG
3257 Springe 1

12.502

---

## VERFAHREN ZUM HERSTELLEN VON FORMTEILEN AUS GIPS, INSBESONDERE PLATTEN

---

### P A T E N T A N S P R Ü C H E

1. Verfahren zum Herstellen von Formteilen aus Gips, insbesondere Platten, der mit Wasser vermischt, geformt und unter Druckanwendung in die Endform des Formteils gebracht wird, d a d u r c h   g e k e n n z e i c h n e t, daß zumindest teilweise verunreinigte Gipsteilchen vor der Druckanwendung mit Bewehrungsmaterialteilchen versehen werden.

2. Verfahren nach Anspruch 1, d a d u r c h   g e k e n n - z e i c h n e t, daß die Gips und/oder Bewehrungsmaterialteilchen mit jeweils einem chemischen Stellmittel zur Beeinflussung der Hydratation versetzt werden.

3. Verfahren nach Anspruch 1 oder 2, d a d u r c h   g e - k e n n z e i c h n e t, daß die Bewehrungsamterialteilchen als Wasserträger und -verteiler zum Abbinden der Gipsteilchen dienen.

4. Verfahren nach Anspruch 3, d a d u r c h   g e k e n n -
z e i c h n e t, daß das Abbindewasser gegebenenfalls Verflüssigungs- oder Fließmittel und/oder hydrophobierende
Mittel enthält.

5. Verfahren nach einem der Ansprüche 1 bis 4, d a d u r c h
g e k e n n z e i c h n e t, daß die Gips- und Bewehrungsteilchen vor der Druckanwendung intensiv gemischt werden.

6. Verfahren nach einem der Ansprüche 1 bis 5, d a d u r c h
g e k e n n z e i c h n e t, daß die Gips- und/oder Bewerungsmaterialteilchen in einem streu- und rieselfähigen Gemisch vorliegen.

7. Verfahren nach einem der Ansprüche 1 bis 6, d a d u r c h
g e k e n n z e i c h n e t, daß als Bewehrungsmaterialteilchen organische und/oder anorganische Teilchen eingesetzt werden.

8. Verfahren nach Anspruch 7, d a d u r c h   g e k e n n -
z e i c h n e t, daß die Teilchen Holzspäne, Holzfasern,
Stroh, Flachs, Baumwollstengel bzw. Vermiculite, Perlite,
Glasfasern, Glasfasernetze sind.

9. Verfahren nach einem der Ansprüche 1 bis 8, d a d u r c h
g e k e n n z e i c h n e t, daß die eine bewehrte Gipsmatrix bildenden, mit Bewehrungsmaterialteilchen versetzten Gipsteilchen zwecks Erlangung der Manipulierfähigkeit
der Formteile bzw. -platten während der Hydratationszeit
so lange unter Preßdruck gehalten wird, bis die Aushärtung
teilweise oder vollständig beendet ist.

10.   Verfahren nach einem der Ansprüche 1 bis 9, d a d u r c h
g e k e n n z e i c h n e t, daß Festigkeitsverluste durch
Verunreinigungen in den Gipsteilchen durch Bewehrungsmaterialteilchen kompensiert werden, welche eine höhere Zerreiß- bzw. Zugfestigkeit besitzen als die Gipsteilchen.

11.   Verfahren nach einem der Ansprüche 1 bis 10, d a d u r c h
g e k e n n z e i c h n e t, daß das Porenvolumen in der
Gipsmatrix durch Verringerung der Menge an Abbindewasser
für die Gipsteilchen auf vorzugsweise weniger als 30 %,
bezogen auf die Gipsteilchen, reduziert wird.

12.   Verfahren nach einem der Ansprüche 1 bis 11, d a d u r c h
g e k e n n z e i c h n e t, daß der Verdichtungsgrad der
bewehrten Gipsmatrix und damit das spezifische Gewicht
der Formteile aus Gips erhöht wird.

13.   Verfahren nach einem der Ansprüche 1 bis 12, d a d u r c h
g e k e n n z e i c h n e t, daß es zumindest teilweise
kontinuierlich und/oder zumindest teilweise diskontinuierlich abläuft.

0173351

bison-werke Bähre & Greten     - 4 -        12.502
GmbH & Co. KG

Die Erfindung betrifft ein Verfahren gemäß dem Oberbegriff des Hauptanspruchs.

Es ist bekannt, daß Chemiegips oder Gips aus der Rauchgas-Entschwefelung, die beide in erheblichen Mengen anfallen, grundsätzlich dem Naturgips entsprechen, weil sie ebenfalls als Dihydrat anfallen. Derartige Abfallgipse können jedoch nicht ohne weiteres für Gipsprodukte verwendet werden, da die in ihnen enthaltenen organischen und anorganischen Verunreinigungen die mechanischen Festigkeitswerte des Gipsprodukts sowie das Abbindeverhalten und hierdurch das Herstellungsverfahren negativ beeinflussen. Deshalb beseitigt man solche Verunreinigungen durch Flotation, Waschen und Umkristallisation mit zwischengeschalteter Entwässerung. Nachteilig daran ist, daß diese vor dem eigentlichen Brennprozeß vorgesehenen Aufbereitungsmaßnahmen hohe Kosten verursachen.

Aufgabe der Erfindung ist es, ein Verfahren der eingangs genannten Art zu schaffen, das eine wirtschaftliche Verwertung von Abfallgips zum Herstellen gebrauchsfähiger Formteile ermöglicht.

Diese Aufgabe wird durch den Gegenstand des Anspruches 1 gelöst.

Der Erfindung liegt somit der überraschende Gedanke zugrunde, die bisher als nachteilig angesehenen Verunreinigungen im Abfallgips zusammen mit Bewehrungsmaterialteilchen positiv sowohl für eine verzögerte sowie beschleunigte Technologie zu nutzen.

Im Unterschied zur beschleunigten Technologie wird bei der verzögerten Technologie jeweils im Sinne der Erfindung der Beginn der Aushärtung, der Versteifungsbeginn, nicht beschleunigt, sondern verzögert. Dies geschieht entweder durch die Verunreinigungen allein
oder durch den Einsatz unterschiedlich dosierter Mengen wenigstens
eines Verzögerungsmittels zwecks Einstellung der verzögernden Wirkung der Verunreinigungen, wobei sich bei letztgenannter Alternative
auch bei schwankenden Verunreinigungsgraden ein definiert verzögerter Versteifungsbeginn ergibt. Dem gegenüber sind die Verhältnisse
bei der beschleunigten Technologie im wesentlichen umgekehrt. Dazwischen
liegt - je nach Art und Menge der Verunreinigungen - die weder verzögerte noch beschleunigte, also die normale Technologie der Erfindung, die meist ohne ein Stellmittel auskommt.

Vorteilhafte Ausgestaltungen und Weiterbildungen des erfindungsgemäßen Verfahrens sind in den Unteransprüchen gekennzeichnet; auf
einige dieser Ansprüche sowie weitere grundlegende Gesichtspunkte
des Lösungsprinzips gemäß der Erfindung wird nachfolgend näher eingegangen:

Zunächst ist im Hinblick auf die Wirtschaftlichkeit wesentlich,
daß in Abkehr von der bisher üblichen Technik von verunreinigten
oder nur teilweise gereinigten Gipsteilchen, die ein billiges
Abfallmaterial darstellen, ausgegangen wird, damit zusammenhängende Festigkeitsverluste aber zumindest durch Bewehrungsmaterialien
für die Gipsmatrix wenigstens ausgeglichen werden.

Als Bewehrungsmaterialien kommen organische und/oder anorganische
Teilchen, z.B. Holzspäne, Holzfasern, Stroh, Flachs, Baumwollstengel bzw. Vermiculite, Perlite, Glasfasern, Glasfasernetze
oder dergleichen erfindungsgemäß in Betracht. Diese Teilchen
dienen nach einer vorteilhaften Ausführungsform gleichzeitig als
Wasserträger und -verteiler, um das zum Abbinden der Gipsteilchen benötigte Wasser in die Mischung einzubringen.

Vorzugsweise werden angefeuchtete Bewehrungsmaterialteilchen und
verunreinigte oder nur teilweise gereinigte Gipsteilchen derart intensiv gemischt, daß eine fertige, ohne weiteres zugabefähige Mischung entsteht, in der alle Gipsteilchen mit dem für die Hydratation benötigten Wasser benetzt sind. Dadurch läßt sich die Menge an Abbindewasser für die bewehrte Gipsmatrix erheblich reduzieren. Dementsprechend tritt auch eine Verringerung des Porenanteils im hergestellten Formteil auf. Das Ergebnis hiervon ist bei einer niedrigen Feuchtigkeitsaufnahme eine erhöhte Naßfestigkeit des Gipsprodukts.

Andere festigkeitserhöhende Maßnahmen der Erfindung bestehen zu dem

- in einem erhöhten Verdichtungsgard der bewehrten Gipsmatrix,
- in der Wahl einer höheren Zugfestigkeit/Zerreißfestigkeit des Bewehrungsmaterials als die Zugfestigkeit der Gipsteilchen,
- in der Bewehrung des Gipsformteils über seinen gesamten Querschnitt, die zu isotropen Biegefestigkeitswerten führt, die jene von üblichen Gipskartonplatten übersteigen.

Typisch für die Zusammensetzung erfindungsgemäßer Formteile sind folgende Bereiche:

| | |
|---|---|
| Gips ................... | 700 - 850 kg |
| Bewehrungsmaterial ....... | 200 - 300 kg atro |
| Handelsübliche Stellmittel (Verzögerungs-, Beschleunigungsmittel)........... | $<$  0,5 kg |
| Wasser (ggf. einschl. Verflüssigungs- oder Fließmittel; hydrophobierende Mittel)................... | 200 - 250 kg |

auf 1 m³ Fertigprodukt mit einem spezifischen Gewicht von 1000 - 1200 kg.

*********************